# EUROPEAN PATENT APPLICATION

(11) **EP 4 852 456 A1**
(43) Date of publication of application: **09.12.2026**
(21) Application number: 26180644.2
(22) Date of filing: 22.05.2026
(51) Int. Cl.: H04R 29/00, G01D 5/14, H04R 3/00, H04R 9/02, H04R 9/06

(54) **SPEAKER AND METHOD FOR PRODUCING SPEAKER**

(30) Priority: 04.06.2025 JP 2025093783
(71) Applicant: Alps Alpine Co., Ltd., Tokyo 145-8501 (JP)
(72) Inventor: Uesugi, Haruki, Tokyo, 145-8501 (JP); Ito, Ryo, Tokyo, 145-8501 (JP); Toita, Hiroki, Tokyo, 145-8501 (JP); Saito, Yuji, Tokyo, 145-8501 (JP)
(74) Representative: Schmitt-Nilson Schraud Waibel Wohlfrom Patentanwälte Partnerschaft mbB

(57) **Abstract**

A speaker, in which a magnetic circuit including a first magnet is disposed below a rear surface of a diaphragm, is provided and includes a second magnet attached to a surface opposite to the rear surface of the diaphragm; and a holding member attached to a front surface of the speaker and holding a third magnet and a magnetic sensor. The magnetic sensor is configured to detect displacement of the diaphragm based on a magnetic field generated by the second magnet and based on the magnetic field generated by the third magnet.

## Description

The present disclosure relates to a speaker configured to detect the movement of a vibrator including a diaphragm with high accuracy using a magnetic sensor.

A speaker configured to perform feedback control by detecting the moving state of a vibrator including a diaphragm using a magnetic sensor (see, for example, JP2022-149259A and JP2022-178131A) is disclosed. The magnetic sensor (e.g., a GMR sensor, which stands for a giant magnetoresistance sensor) is configured to detect the angle of a magnetic flux. The magnetic sensor enables detection of displacement of the vibrator with high accuracy based on a change in the angle of a magnetic flux vector obtained by combining a magnetic flux from a fixed magnet forming a magnetic circuit and a magnetic flux from a movable magnet attached to the vibrator.

The present disclosure relates to a speaker and method for producing a speaker according to the appended claims. Embodiments are disclosed in the dependent claims.

A speaker according to an aspect of the present disclosure is a speaker in which a magnetic circuit including a first magnet is disposed below a rear surface of a diaphragm. The speaker includes: a second magnet attached to a surface opposite to the rear surface of the diaphragm; and a holding member attached to a front surface of the speaker and holding a third magnet and a magnetic sensor. The magnetic sensor is configured to detect displacement of the diaphragm based on a magnetic field generated by the second magnet and based on the magnetic field generated by the third magnet.

According to a further aspect, a method for producing a speaker in which a magnetic circuit including a first magnet is disposed below a rear surface of a diaphragm includes: attaching a second magnet to a surface opposite to the rear surface of the diaphragm; and attaching a holding member to a front surface of the speaker, the holding member holding a third magnet and a magnetic sensor.
FIG. 1 is a diagram schematically illustrating a positional relationship between: a GMR sensor; and a first magnet that is fixed and a second magnet that is movable.
FIG. 2 is a diagram illustrating the principle of displacement detection of a vibrator using a GMR sensor.
FIG. 3 is a schematic cross-sectional diagram of a conventional speaker.
FIG. 4 is a perspective diagram including a cross section in a Z direction of a speaker according to an embodiment of the present disclosure.
FIG. 5A is a diagram for describing a configuration example of a displacement detector for a diaphragm according to an embodiment of the present disclosure.
FIG. 5B is a diagram illustrating a second magnet when viewed directly laterally according to an embodiment of the present disclosure.
FIG. 5C is a diagram illustrating a magnetization direction of a third magnet according to an embodiment of the present disclosure.
FIG. 6 is a perspective diagram in which a grille illustrated in FIG. 5A is attached to a front surface of the speaker.
FIG. 7 is a perspective diagram illustrating a configuration example of another grille of the present embodiment.

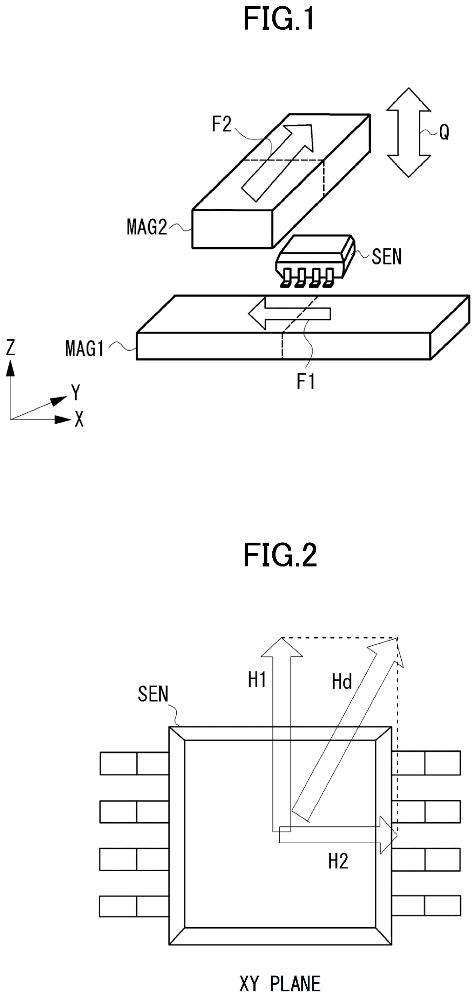

FIG. 1 is a diagram schematically illustrating a positional relationship between a GMR sensor and fixed/movable magnets, which are disposed in a conventional speaker. As illustrated in FIG. 1, the positions of a first magnet MAG1, forming a magnetic circuit, and a GMR sensor SEN are respectively fixed, and a second magnet MAG2 attached to a vibrator is movable to move in accordance with an amplitude Q of the vibrator. Also, the two magnets are disposed such that the direction of a magnetic field F1 of the first magnet MAG1 applied to the GMR sensor SEN is substantially orthogonal to the direction of a magnetic field F2 of the second magnet MAG2.

FIG. 2 is a diagram illustrating the principle of displacement detection of a vibrator using the GMR sensor. The GMR sensor SEN utilizes a GMR effect in which a resistance value changes by the effect of an external magnetic field. The GMR sensor SEN is bias-driven, for example, by a DC voltage or a DC current. When the resistance value is changed by the GMR effect caused by the external magnetic field, the GMR sensor SEN outputs a voltage or a current in accordance with the resistance change. As illustrated in FIG. 2, the GMR sensor SEN detects the angle of a resultant vector magnetic flux Hd obtained by combining a magnetic flux vector H1 from the first magnet MAG1 and a magnetic flux vector H2 from the second magnet MAG2 in an XY plane, which is a detection surface. Since the relative distance between the GMR sensor SEN and the first magnet MAG1 does not change, the magnetic flux vector H1 does not substantially change. Whereas, since the relative distance between the second magnet MAG2 and the GMR sensor SEN changes in accordance with the amplitude Q of the vibrator, the magnetic flux vector H2 changes accordingly. When the second magnet MAG2 approaches the GMR sensor SEN, the magnetic flux vector H2 increases, and when the second magnet MAG2 moves away from the GMR sensor SEN, the magnetic flux vector H2 decreases. This causes a change in the angle of the resultant vector Hd. The angle change of the resultant vector Hd corresponds to the displacement of the amplitude Q of the vibrator.

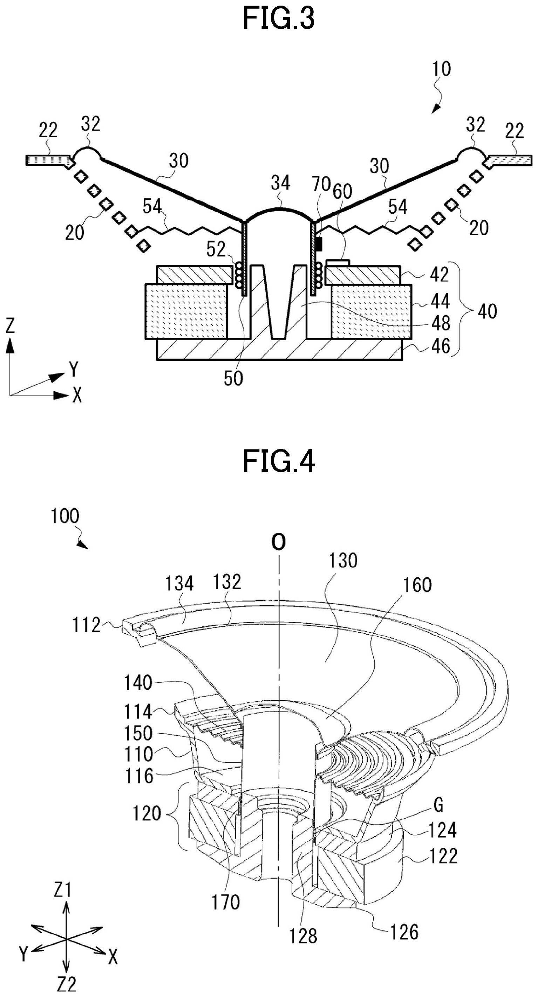

FIG. 3 is a schematic cross-sectional diagram of a conventional speaker using the GMR sensor. A speaker 10 includes a frame 20, a diaphragm 30, and a magnetic circuit 40. The diaphragm 30 is attached to one end 22 of the frame 20 via a hemispherical edge 32, and a dome-shaped center cap 34 is attached to the center of the diaphragm 30. The magnetic circuit 40 includes a ring-shaped top plate 42, a ring-shaped first magnet 44, a disk-shaped bottom plate 46, a center pole 48 projecting upward from the center of the bottom plate 46, a cylindrical bobbin 50 disposed outside the center pole 46, and a voice coil 52 wound around a peripheral portion of the bobbin 50. The bobbin 50 is connected to an intermediate portion of the frame 20 via a damper 54, and the upper end of the bobbin 50 is adhesively fixed to the rear surface of the diaphragm 30.

The GMR sensor 60 is fixed to the surface of the top plate 42 in the XY plane, and a second magnet 70 is fixed above the bobbin 50 in a magnetic gap. The magnetic field F1 in a radial direction of the top plate 42 generated by the first magnet 44 and the magnetic field F2 in a tangential direction of the bobbin 50 generated by the second magnet 70 are applied to the GMR sensor 60.

In such a conventional speaker structure, in which the GMR sensor 60 and the second magnet 70 are disposed, there is a need to magnetize the first magnet 44 during production (specifically, before assembly of a vibrating system). That is, the first magnet 44 cannot be magnetized after the GMR sensor 60 is disposed. When the first magnet 44 is magnetized during production, the production efficiency of the subsequent assembly step decreases due to the influence of a magnetic force of the first magnet 44. In addition, the second magnet 70 magnetized in a different step is not readily handled, resulting in difficulty in attachment.

It is an object of the present disclosure to provide a speaker and a method for producing the speaker that can address such problems and increase production efficiency.

A speaker according to an embodiment of the present disclosure has a function to monitor behaviors of a diaphragm in real time using a magnetic sensor. A magnet and a magnetic sensor for displacement detection of the diaphragm can be attached after assembly of a speaker is substantially completed, thereby improving the attachability or productivity of the speaker. The drawings referred to in the description of the following embodiments include exaggerated representations for facilitating understanding of the present disclosure, and do not express the shapes or scales of an actual product.

Next, embodiments of the present disclosure will be described in detail with reference to the drawings. FIG. 4 is a perspective diagram including a cross section in a Z direction illustrating a basic structure of a speaker to which the embodiments of the present disclosure are applicable. In FIG. 4, a Z1-to-Z2 direction is a front-rear direction of a speaker 100, a Z1 direction is a front side (front surface), and a Z2 direction is a rear side. Also, FIG. 4 illustrates a center axis O extending in the front-rear direction (Z1-to-Z2 direction). A main portion of the speaker 100 has a structure that is substantially rotationally symmetric about the center axis O.

The speaker 100 includes a frame 110 formed of a non-magnetic material or a magnetic material. The frame 110 has a tapered shape with a diameter gradually increasing toward the front side, and a magnetic circuit 120 is fixed to the rear side of the frame 110 by means of adhesion, screwing, or the like.

The magnetic circuit 120 includes a first magnet 122 configured to drive the speaker and having a shape of a ring centered on the center axis O, a ring-shaped top plate (opposing yoke) 124 bonded to the front side of the first magnet 122, a back plate (rear yoke) 126 bonded to the rear side of the first magnet 122, and a center pole (center yoke) 128 positioned inside the first magnet 122 and the top plate 124 and extending toward the front side from the back plate 126. The top plate 124, the back plate 126, and the center pole 128 are formed of a magnetic material.

The center pole 128 has a cylindrical shape. A magnetic gap G is formed along a circumference centered on the center axis O between the outer peripheral surface of the center pole 128 and the inner peripheral surface of the top plate 124. In the magnetic circuit 120, a driving magnetic field generated by the first magnet 122 crosses the magnetic gap G from the top plate 124, and flows through the center pole 128 and the back plate 126.

A cone-shaped diaphragm 130 is provided inside a front-side portion of the frame 110. A front-end peripheral portion 112 of the frame 110 and an outer peripheral end 132 of the diaphragm 130 are bonded via an elastically deformable edge 134. The edge 134 and the front-end peripheral portion 112 are adhesively fixed to each other, and the edge 134 and the outer peripheral end 132 are adhesively fixed to each other. An inner peripheral fixing portion 114 is formed on the inner surface of an intermediate portion of the frame 110. An end of an elastically deformable damper 140 having a corrugated cross section is adhesively fixed to the inner peripheral fixing portion 114. The magnetic circuit 120 is attached to a rear end 116 of the frame 110.

A bobbin 150 is provided inside the frame 110. The bobbin 150 has a cylindrical shape centered on the center axis O. The inner peripheral end of the diaphragm 130 is adhesively fixed to the outer peripheral surface of the bobbin 150, and the end of the damper 140 is adhesively fixed to the outer peripheral surface of the bobbin 150. A dome-shaped cap 160 is provided at the center of the diaphragm 130. The cap 160 covers a front-side opening of the bobbin 150. The peripheral portion of the cap 160 is adhesively fixed to the front surface of the diaphragm 130. A voice coil 170 is wound around the outer peripheral surface of the rear end of the bobbin 150. The voice coil 170 is located within the magnetic gap G of the magnetic circuit 120. The diaphragm 130 and the bobbin 150 are supported to be vibratable in the front-rear direction through elastic deformation of the edge 134 and the damper 140.

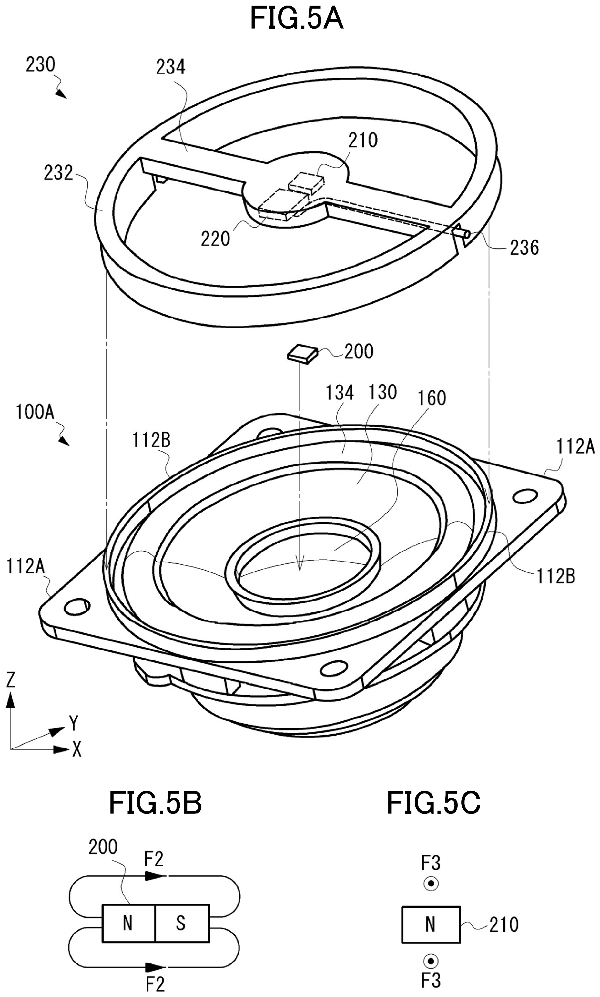

Further, the speaker 100 is provided with a displacement detector configured to detect the displacement of the diaphragm 130. The displacement detector can be attached to a completed speaker unit. FIG. 5A is a diagram for describing a configuration example of a displacement detector according to an embodiment. The displacement detector includes: a second magnet 200 to be attached to the surface of the cap 160 of a speaker 100A; and a grille 230 holding a third magnet 210 and a GMR sensor 220.

The speaker 100A illustrated in FIG. 5A is formed by processing a front-end peripheral portion 112 of the frame 110 of the speaker 100 illustrated in FIG. 4 into a rectangular flange 112A. Also, a rib 112B, which is an annular projection, is formed on the surface of the front-end peripheral portion 112. No particular limitation is imposed on the attachment method of the second magnet 200. For example, the second magnet 200 is adhesively attached to the surface of a center portion of the cap 160, which is circular. When the diaphragm 130 vibrates, the second magnet 200 vibrates along with the diaphragm 130. The attachment of the second magnet 200 can be performed after the assembly of the speaker 100A is substantially completed. That is, the attachment of the second magnet 200 is possible after the diaphragm 130 and the magnetic circuit 120 are assembled on the frame 110, and thus, the first magnet 122 can be magnetized after completion of the assembly, not during production.

No particular limitation is imposed on the shape and size of the second magnet 200. For example, when the second magnet 200 is rectangular, the second magnet 200 is disposed such that the magnetization direction is horizontal. That is, as illustrated in FIG. 5B, when the second magnet 200 is viewed directly laterally, the second magnet 200 is disposed such that the magnetic field (magnetic field line) F2, directed from one end (N pole) of the second magnet 200 to the other end (S pole), includes a portion parallel to the XY plane.

The grille 230 is a protective cover that covers the front surface of the speaker 100A. The grille 230 may be a generally used speaker component, or may be a dedicated speaker component. No particular limitation is imposed on the material of the grille 230, and the grille 230 may be formed, for example, of a resin for weight reduction. The grille 230 includes an annular portion 232, and an extending portion 234 that extends in a straight line through the center of the annular portion 232. The third magnet 210 and the GMR sensor 220 are housed in a circular portion at the center of the extending portion 234. A groove that is aligned with the rib 112B is formed in the bottom surface of the annular portion 232. When attaching the grille 230 to the front surface of the speaker 100A, the rib 112B is fitted into the groove of the annular portion 232. The grille 230 may be detachable with respect to the front surface of the speaker 100A.

The third magnet 210 and the GMR sensor 220 are fixed to the XY plane of the extending portion 234. In one embodiment, the GMR sensor 220 is mounted on a printed wiring board (not shown), and an electronic component configured to process a detection signal of the GMR sensor 220 may be mounted on the printed wiring board. Further, the extending portion 234 houses an interconnect 236 for electrical connection to the GMR sensor 220.

No particular limitation is imposed on the shape and size of the third magnet 210. For example, when the third magnet 210 is rectangular, the third magnet 210 is disposed such that the magnetization direction is horizontal, as in the second magnet 200. However, the magnetization direction of the third magnet 210 preferably differs from the magnetization direction of the second magnet 200. For example, as illustrated in FIG. 5C, the magnetization direction of the third magnet 210 is orthogonal to the magnetization direction of the second magnet 200, and a portion in which a magnetic field (magnetic field line) F3, directed from one end (N pole) of the third magnet 210 to the other end (S pole), is parallel to the XY plane is orthogonal to the direction of the magnetic field F2. However, the direction of the magnetic field F3 of the third magnet 210 is not necessarily orthogonal to the direction of the magnetic field F2, and may differ from the direction of the magnetic field F2 by any angle, i.e., an angle other than 90 degrees.

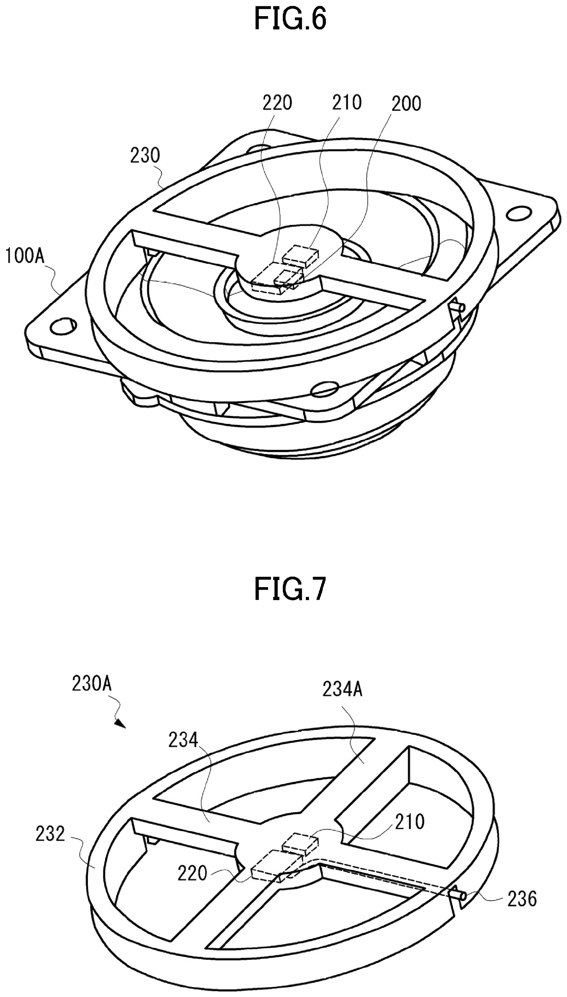

FIG. 6 is a perspective diagram in which the grille is attached to the front surface of the speaker. When the grille 230 is attached, the third magnet 210 and the GMR sensor 220, housed in the extending portion 234, are disposed above and in proximity to the second magnet 200, which is disposed on the surface of the cap 160. As described in the principle of displacement detection with reference to FIG. 2, the GMR sensor 220 detects the angle of the resultant magnetic flux vector Hd obtained by combining the magnetic flux vector H2 generated by the second magnet 200 and the magnetic flux vector H3 generated by the third magnet 210 in the XY plane, which is the detection surface. Here, the GMR sensor 220 does not use the magnetic field generated by the first magnet 122 forming the magnetic circuit 120, in order to detect the displacement of the diaphragm 130.

When an audio signal is applied to the voice coil 170 to vibrate the diaphragm 130, the second magnet 200 vibrates along with the diaphragm 130, thereby changing the relative position between the second magnet 200 and the GMR sensor 220 and thus changing the magnetic flux vector H2 passing through the GMR sensor 220. Conversely, since the relative position between the third magnet 210 and the GMR sensor 220 does not change, the magnetic flux vector H3 applied to the GMR sensor 220 is constant. In this manner, the GMR sensor 220 detects the angle change of the magnetic flux vector Hd, which is a resultant vector of the magnetic flux vectors H2 and H3, and calculates the displacement of the diaphragm 130 from the detected angle change. For example, the electronic component mounted on the printed circuit board is configured to receive a detection signal representing the angle change of the resultant magnetic flux vector from the GMR sensor 220, calculate the displacement of the diaphragm from the detection signal, and feedback the calculated result to an amplifier.

According to the present embodiments, after the assembly step of the diaphragm system of the speaker, the second magnet 200 is attached to the surface of the cap 160, and the grille 230 holding the third magnet 210 and the GMR sensor 220 is attached to the front surface of the speaker. This enables the magnetization of the first magnet after the assembly of the speaker is substantially completed, thereby increasing the production efficiency of the assembly step of the speaker. Also, the second magnet 200, the third magnet 210, and the GMR sensor 220, forming the displacement detector, can be attached after the assembly. This increases the productivity of the speaker.

The grille described in the above embodiments protects the diaphragm and the magnetic circuit from dust, impacts, contamination of foreign matter, and the like. In addition, the grille is designed for sound to pass through smoothly, in order to suppress influence on sound quality. Alternatively, the grille is designed in consideration of a design of its outer appearance. The grille is formed, for example, of plastic, metal, fabric, or the like. Various types of grille may be used, e.g., a mesh-type grille, a grid-type grille, or a fabric-covered grille. The present disclosure is applied to any such grille, and is not limited to the grille illustrated in FIG. 5A. For example, the present disclosure is applied to a grid-type grille 230A illustrated in FIG. 7. The grille 230A includes extending portions 234 and 234A extending in a cross shape, and the third magnet 210 and the GMR sensor 220 are held at the center of the grille 230A.

In the above embodiments, the second magnet 200 is attached to the center portion of the cap 160. However, this is merely an example. The second magnet 200 may be attached to the peripheral portion of the cap 160, or to the surface of the diaphragm 130 rather than the cap 160. In this case, the third magnet 210 and the GMR sensor 220 may be held to be close to the second magnet 200, i.e., at positions away from the center portion of the extending portion 234.

In the above embodiments, the GMR sensor is exemplified as the magnetic sensor configured to detect the magnetic angle. Instead, a TMR sensor can be used.

Although embodiments of the present disclosure have been described in detail, the present disclosure is not limited to the specific embodiments, and various modifications may be possible within the scope of the claims.

According to the present disclosure, the second magnet is attached to the surface of the diaphragm, and the third magnet and the magnetic sensor are held in the holding member to be attached to the front surface of the speaker. Thus, there is no need to magnetize the first magnet during production, thereby increasing the production efficiency of the speaker.

## Claims

1. A speaker in which a magnetic circuit including a first magnet is disposed below a rear surface of a diaphragm, the speaker comprising:
a second magnet attached to a surface opposite to the rear surface of the diaphragm; and
a holding member attached to a front surface of the speaker and holding a third magnet and a magnetic sensor, wherein
the magnetic sensor is configured to detect displacement of the diaphragm based on a magnetic field generated by the second magnet and based on the magnetic field generated by the third magnet.

2. The speaker according to claim 1, wherein
the second magnet is attached to a surface of a cap covering an opening of a bobbin.

3. The speaker according to claim 1 or 2, wherein
the holding member is a grille covering the front surface of the speaker.

4. The speaker according to one of claims 1 to 3, wherein
the grille includes:
an annular portion bonded to the front surface of the speaker, and
an extending portion extending through a center of the annular portion, and
the grille holds the third magnet and the magnetic sensor in a center portion of the extending portion.

5. The speaker according to one of claims 1 to 4, wherein
the magnetic sensor is a giant magnetoresistance sensor.

6. A method for producing a speaker in which a magnetic circuit including a first magnet is disposed below a rear surface of a diaphragm, the method comprising:
attaching a second magnet to a surface opposite to the rear surface of the diaphragm; and
attaching a holding member to a front surface of the speaker, the holding member holding a third magnet and a magnetic sensor.
